# EUROPÄISCHE PATENTSCHRIFT

(11) **EP 1 407 536 B1**
(45) Veröffentlichungstag und Bekanntmachung des Hinweises auf die Patenterteilung: **14.06.2017**
(21) Anmeldenummer: 02762335.4
(22) Anmeldetag: 10.07.2002
(51) Int. Cl.: H02P 1/16

(54) **VERFAHREN ZUR GLEICHMÄSSIGEN LAUFSTEUERUNG EINES RELUKTANZMOTORS UND EINRICHTUNG ZUR EINSCHALTSTROM BEGRENZUNG**
METHOD FOR CONTROLLING A RELUCTANCE MOTOR
PROCEDE DE COMMANDE D'UN MOTEUR A RELUCTANCE

(30) Priorität: 16.07.2001 DE 10135688; 27.06.2002 DE 10229443
(43) Veröffentlichungstag der Anmeldung: 14.04.2004
(73) Patentinhaber: Vorwerk & Co. Interholding GmbH, 42275 Wuppertal (DE)
(72) Erfinder: CALDEWEY, Uwe, 44229 Dortmund (DE); POPPEN, Günter, 42277 Wuppertal (DE)
(74) Vertreter: Müller, Enno
(86) Internationale Anmeldenummer: PCT/EP2002/007662
(87) Internationale Veröffentlichungsnummer: WO 2003/009448

(56) Entgegenhaltungen:
- FR-A- 2 161 602
- US-A- 5 936 373

## Beschreibung

Die Erfindung betrifft ein Verfahren zur Steuerung eines Reluktanzmotors nach den Merkmalen des Oberbegriffs des Anspruches 1

Bei geschalteten Reluktanzmotoren, welche allgemein bekannt sind, hängt das gleichmäßige Laufen des Rotors sowie das Anlaufen des Rotors von der Lage desselben zum Statorfeld ab. So kann je nach Lage des Rotors zum Statorfeld das Drehmoment, insbesondere bei geringen Drehzahlen, so klein sein, dass der Rotor stehenbleibt. Weiter wurde festgestellt, dass bei einer Position eines Rotorsegmentes zwischen zwei Statorspulen aufgrund des in dieser Position wirkenden hohen Drehmomentes eine Drehzahlüberhöhung bewirkt wird.

Aus der FR 2161602 A ist ein Schrittmotor bekannt, bei welchem durch An- und Abschalten von Phasen eine schrittweise Bewegung des Rotors erfolgt. Ein gleichmäßiger Lauf des Rotors ist nicht gegeben.

Ausgehend von dem genannten Stand der Technik beschäftigt sich die Erfindung mit der Aufgabe, ein Verfahren zur Steuerung eines Reluktanzmotor anzugeben, das einen gleichmäßigen Lauf des Rotors, auch bei geringen Drehzahlen, ermöglicht.

Diese Aufgabe ist beim Gegenstand des Anspruches 1 gelöst, wobei darauf abgestellt ist, dass zu einem Zeitpunkt, in dem eine erste Spule bereits erregt ist, nämlich bei Bewegung eines Rotorsegments zu der Spule, die zweite in Drehrichtung des Rotors folgende Spule bereits zusätzlich erregt wird. Dies bedeutet, dass in einem Bereich, in welchem ein Rotorsegment in Überdeckungsnähe zur nächsten Statorspule gelangt, in welcher Situation aufgrund des hier einwirkenden, sehr geringen Momentes ein Stillstand oder zumindest eine Drehzahlreduzierung befürchtet werden muss, die nächste Phase zum Momentenausgleich zugeschaltet wird, so dass das Rotorsegment gleichmäßig, laufruhig an der ersten Spule vorbeidreht. In vorteilhafter Weise erfolgt die Zuschaltung der nächsten Phase in einer Drehstellung des Rotorsegmentes, welche in Drehrichtung des Rotorsegmentes betrachtet vor Erreichen der Deckstellung von Rotorsegment und Spule positioniert ist.

Auch ist gegeben, dass zu einem Zeitpunkt, in dem die erste Spule noch erregt ist, bereits die zweite, in Drehrichtung des Rotors folgende Spule, zusätzlich erregt wird. Auch hierdurch lässt sich ein Momentenloch überbrücken, so dass so dass einem Stehenbleiben des Rotors auch bei geringen Drehzahlen entgegengewirkt ist. Des Weiteren ist hierdurch auch das Anlaufen des Rotors gewährleistet. Durch die Zuschaltung der nächsten Spule bzw. der nächsten Phase wird eine Phasenüberlappung erreicht. Eine Verbesserung des Anlaufverhaltens und des Rotor-Laufverhaltens bei geringen Drehzahlen ist auch dadurch erreicht, dass der Strom bei zusätzlich zur ersten Spule erregter zweiter Spule erhöht wird. Somit wird zusätzlich zur Erregung der nächsten Spule eine Stromverstärkung durchgeführt, womit eine Vergleichmäßigung des Momentenbildes erreicht wird. Bevorzugt wird diesbezüglich, dass der Strom für eine vorgegebene Zeitspanne erhöht wird.

Die gewünschte Laufruhe des Rotors kann des Weiteren dadurch noch verbessert werden, dass mit Bewegung eines Rotorsegmentes zu einer Spule die Stromstärke dieser Spule erhöht wird, wobei diese Stromerhöhung weiter bevorzugt vor der zusätzlichen Erregung der folgenden zweiten Spule erfolgt. Die Zuschaltung der zweiten, folgenden Phase sowie die Erhöhung des Stromes der ersten Spule erfolgt in Abhängigkeit von der Lage des Rotors zum Statorfeld. Um diese Rotorlage zu erfassen, kann der Rotor mit einer Geberscheibe drehfest verbunden sein, welch letztere eine eindeutig definierte Zuordnung zur Rotorposition besitzt, wodurch mittels geeigneter Maßnahmen, wie bspw. Sensoren, die Rotorposition eindeutig bestimmt werden kann. So können weiter bspw. an der Geberscheibe zugeordnet einem Rotorsegment Geberausformungen ausgebildet sein, die von einem ortsfesten Sensor erfassbar sind.

Bei dem erfindungsgemäßen Verfahren wird die Momentenglättung unter Verwendung einer einfachen Rotorlage-Sensorik durch eine rotorabhängige Bestromung jeder einzelnen Phase erreicht. Durch ein entsprechend kodiertes Signal der Geberscheibe wird die jeweilige Statorphase mit einem berechneten Stromsollwert bestromt. Da der Motor in diesem Bereich über ein hohes Drehmoment verfügt, muss dieser Stromwert vergleichsweise niedrig sein, um eine Drehzahlüberhöhung zu vermeiden. Nähert sich der Rotorpol weiter dem Statorpol, so ist durch entsprechende Gestaltung der Geberscheibe gewährleistet, dass bei Erreichen dieser Zone niedrigeren Moments ein entsprechendes Signal erzeugt wird. In diesem Punkt wird der Strom durch die Spule um einen entsprechenden Faktor erhöht, der die Momentenabschwächung ausgleicht. Da sich der Strom in der nächsten Statorspule erst aufbauen muss, verfügt der Motor zum Umschaltzeitpunkt über ein sehr geringes Drehmoment.

Beim Umschalten wird die vorhergehende Spule daher nicht sofort abgeschaltet; der Stromsollwert wird entsprechend erhöht. Das noch vorhandende abnehmende Drehmoment der alten Phase addiert sich zum steigenden Drehmoment der neuen Phase.

In der Summe bleibt das Drehmoment nahezu konstant. Die erste Spule wird abgeschaltet, bevor der Bereich negativen Moments erreicht wird. Das erreichte Stromprofil wird bspw. durch eine Geberscheibe ermöglicht, welche 24 Pulse je Umdrehung bietet.

Bevorzugt wird eine Ausbildung, bei welcher mehr Pulse, so bevorzugt 360 Pulse je Umdrehung, erfasst werden, womit die gewünschte Vergleichmäßigung des Momentenbildes weiter verbessert wird. Hierdurch ist auch weiter eine ideale Stromkurve ermöglicht, die angepasst ist an den Momentenverlauf.

In einer Weiterbildung des Verfahrens ist vorgesehen, dass ein beim Einschalten des Reluktanzmotors auftretender Einschaltstrom hinsichtlich seiner Höhe begrenzt wird. Ohne weitere Maßnahmen erreicht der Einschaltstrom extrem hohe Werte, die deutlich über den Nennwerten liegen. Zufolge dessen ist eine strombegrenzende Maßnahme erforderlich. Dies wird bspw. dadurch gelöst, dass die Begrenzung mittels in Reihe geschalteter Widerstände erfolgt.

Diese Widerstände sind Teil eines Zwischenkreises, über welchen eine Gleichspannung zur Versorgung des Reluktanzmotors zur Verfügung gestellt wird. Beim Einschalten des Reluktanzmotors wird ein Zwischenkreis-Elektrolytkondensator über Widerstände aufgeladen, die nach dem Start des Motors gebrückt werden. Die Widerstände werden im üblichen Betrieb des Reluktanzmotors überbrückt.

Zufolge dieses Verfahrens wird der Spitzenstrom auf einen völlig unkritischen Wert begrenzt, so zum Beispiel auf ein Fünftel des Nennstromes. Die beim Betrieb des Motors erforderliche Überbrückung der Widerstände wird mittels eines Schalters durchgeführt. Letzterer kann ein Halbleiter oder ein Relais sein.

Die Anfahrshombegrenzung setzt voraus, dass eine gewisse Verzögerung bis zum Start des Reluktanzmotors vorhanden sein darf. In dieser Zeit wird der Kondensator auf Nennspannung aufgeladen, so bspw. im Fall von Netzbetrieb mit 230 Volt AC auf 325 Volt DC.

Ist der Motor gestartet, werden die Widerstände durch den Schalter überbrückt. Hier kommt bevorzugt ein einpoliges Relais zum Einsatz. Bevorzugt werden in Serie geschaltete Widerstände vor dem Kondensator angeordnet. Weiter können diesbezüglich Thermal cut-off-Widerstände eingesetzt werden, welche bei übermäßiger Erwärmung den Strom unterbrechen.

Die Einschaltstrombegrenzung kann weiter mit einer Überwachung der Zwischenkreisspannung kombiniert werden, wobei in diesem Fall anstelle üblicher Thermal-cut-off-Widerstände auf einfache Widerstände zurückgegriffen werden kann. Sofern die Widerstände nicht überbrückt wurden, wird erst dann ein kritischer Zustand erreicht, wenn ein bestimmter Strom fließt, der die zulässige Verlustleistung der Widerstände überschreiten lässt. Dieser kritische Strom entspricht dann auch einer bestimmten Spannung im Zwischenkreis, d. h. eine bestimmte untere Spannung stellt sich ein. Bei stromgeregelten Motoren kann zur Detektierung des Zustandes des Überbrückungsschalters ein Strom eingeprägt werden.

Die Spannung im Zwischenkreis kann vor dem Bestromen gemessen werden. Der Abfall der Spannung bei Bestromung gibt dann direkt Aufschluss darüber, ob die Überbrückung der Widerstände aktiv ist. Ist sie nicht aktiv, so wird sich ein entsprechend hoher Spannungsabfall an den Widerständen einstellen. Dieser führt dann zu einem Spannungseinbruch im Zwischenkreis, der zuverlässig detektiert werden kann. Bei Betrieb des Motors und ausfallendem Überbrückungsschalter wird die Zwischenkreisspannung in Abhängigkeit von der Motorbelastung ebenfalls einbrechen.

Es ist in diesem Fall erforderlich, dass bei Unterschreiten einer bestimmten Spannung die Abschaltung des Motors durchgeführt wird. Hierbei erfolgt eine Bewertung der minimalen Spannung unter Berücksichtigung des Motorstroms.

Der Zeitpunkt zum Überbrücken der Widerstände kann auf verschiedene Art und Weise bestimmt werden. Zunächst ist eine reine Zeitsteuerung ohne Überwachung möglich. Es wird lediglich eine feste Zeit abgewartet, bis das Relais bzw. der Schalter betätigt wird. Die Zeit lässt sich anhand der Zeitkonstante aus Widerstand und Elektrolytkondensator festlegen. Informativer ist die Beobachtung der Zwischenkreisspannung nach dem Einschalten. Die Beobachtung des Kurvenverlaufs lässt eine Aussage über korrekte Funktion präzise erkennen. Ebenso können die Widerstände überbrückt werden, sobald sich die Zwischenkreisspannung nicht mehr stark ändert oder einen bestimmten Wert überschritten hat.

Die Wahl der Änderung der Spannung als Kriterium erlaubt den Betrieb bei verschiedenen Eingangsspannungen, ohne dass Änderungen erforderlich sind. Insgesamt lassen sich über einen Mikrokontroller bestimmte Plausibilitätskontrollen machen, durch die die Funktion der Einschaltstrombegrenzung getestet werden kann.

Nachfolgend ist die Erfindung anhand der beigefügten Zeichnung, welche lediglich ein Ausführungsbeispiel darstellt, näher erläutert. Es zeigt:
- Fig. 1: in perspektivischer, schematischer Darstellung einen Rotor eines Reluktanzmotors mit einer drehfest mit dem Rotor verbunden Geberscheibe und ortsfesten Sensoren zur Erfassung der Rotorposition;
- Fig. 2: eine schematische Ansicht auf den Rotor und Statorspulen, bei strichpunktiert dargestellter Anordnung der Sensoren, eine erste Rotorstellung betreffend;
- Fig. 3: eine Folgedarstellung der Fig. 2;
- Fig. 4: eine Folgedarstellung der Fig. 3;
- Fig. 5: eine weitere Folgedarstellung;
- Fig. 6: ein Diagramm zur Veranschaulichung der Größe des Drehmoments in Abhängigkeit zum Drehwinkel eines Rotorsegmentes; und
- Fig. 7: ein Ablaufdiagramm, die Signale der beiden, mit der Geberscheibe des Rotors zusammenwirkenden Sensoren in Abhängigkeit von der Rotorumdrehung betreffend.

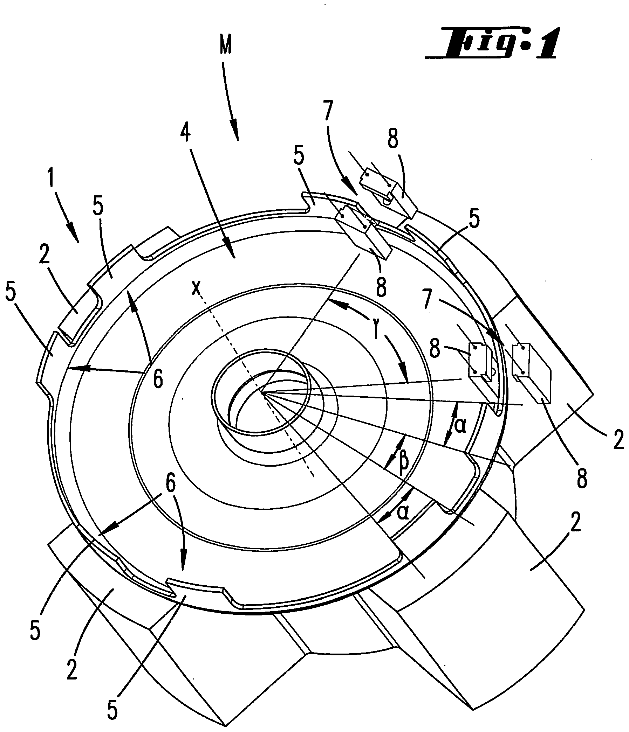

Dargestellt und beschrieben ist zunächst mit Bezug zu Fig. 1 ein Rotor 1 mit vier winkelgleichmäßig um eine Rotorachse x angeordneten Rotorsegmenten 2, zur Zuordnung in einem Vier-/Sechs-Reluktanzmotor M.

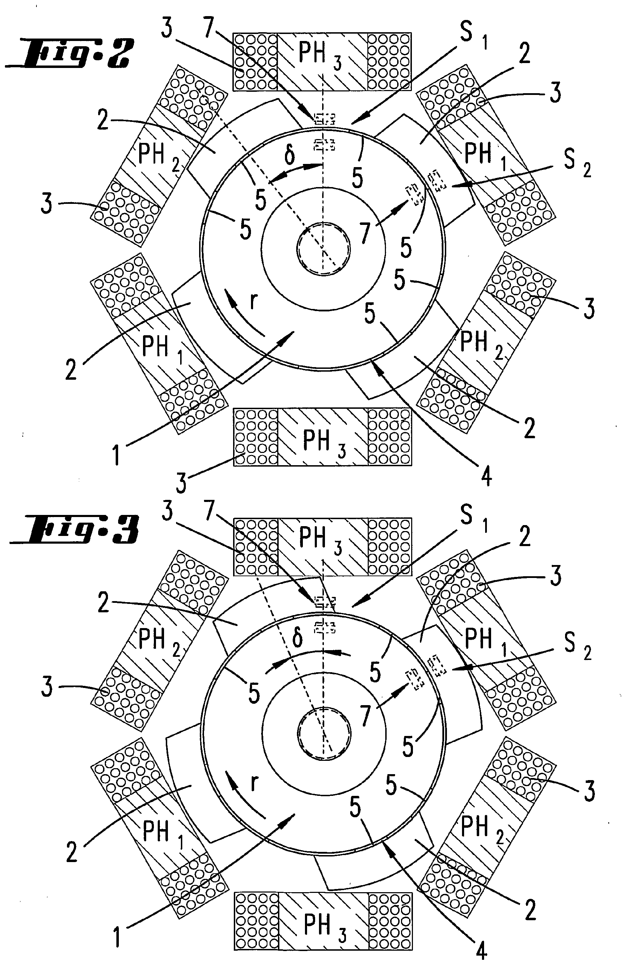

Der vierpolige Rotor 1 ist zuordbar einem nicht näher dargestellten Stator mit sechs winkelgleichmäßig um die Rotationsachse x des Rotors 1 angeordneten Spulen 3 (vergl. Fig. 2).

An dem Rotor 1 ist drehfest eine koaxial zur Rotorachse x angeordnete, hohlzylindrische Geberscheibe 4 befestigt. Aus der Zylinderwandung dieser Geberscheibe 4 sind jeweils ein, einem Rotorsegment 2 zugeordnetes Paar von Geberausformungen 5 freigeschnitten, wobei jede Geberausformung 5 eines Paares 6, bezogen auf die Rotationsachse x, einen Winkel α von 15° einschließt. Die sich gegenüberliegenden Randkanten benachbarter Geberausformungen 5 eines Paares 6 schließen gleichfalls einen Winkel β von 15° ein.

Die Zuordnung der Geberausformungen 5 zu den Rotorsegmenten 2 ist eindeutig. So ist jeweils einer Geberausformung 5 eines Paares 6 mittig des zugeordneten Rotorsegmentes 2 positioniert. Die andere Geberausformung 5 des Paares 6 ist je nach Drehrichtung des Rotors 1 winkelversetzt zu der ersten Geberausformung 5 vor bzw. hinter dem Rotorsegment 2 angeordnet.

Zur Erfassung der Rotorlage sind Sensorschranken 7 bildende Sensoren 8 vorgesehen, welche ortsfest derart angeordnet sind, dass im Zuge der Rotordrehung die Geberausformungen 5 der Geberscheibe 4 diese Sensorschranken 7 durchlaufen.

Die Sensoren 8 bzw. die Sensorschranken 7 sind des Weiteren so positioniert, dass diese, bezogen auf die Rotationsachse x, einen Winkel y von ca. 45° einschließen.

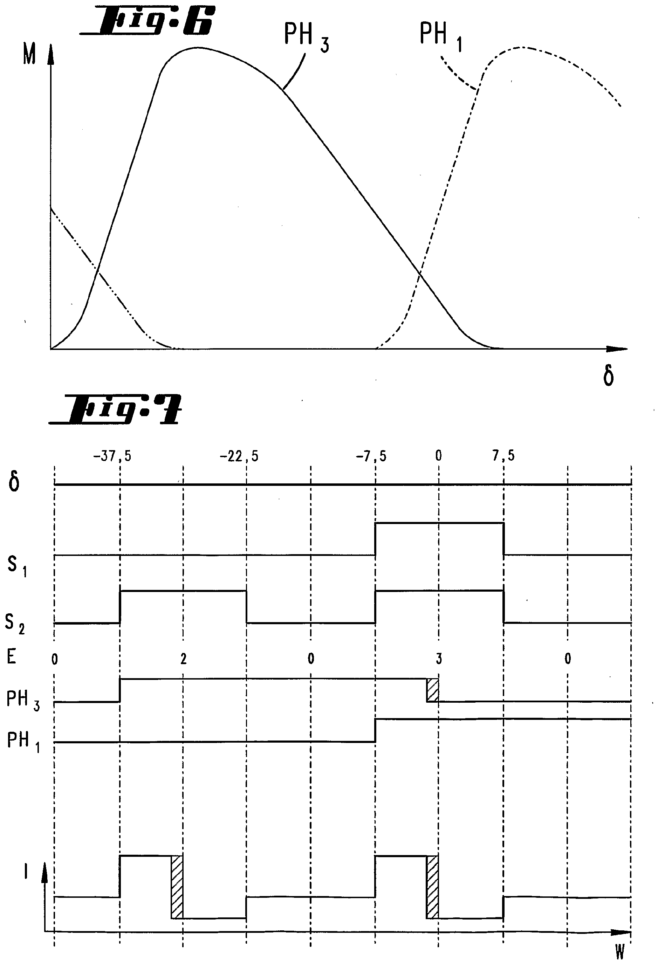

Durch die vorbeschriebene Anordnung der Sensoren 8 und die Konfiguration der Geberscheibe 4 ist eine eindeutige Lageerkennung der Rotorsegmente 2 in Abhängigkeit zu den Spulen 3 erreichbar, dies bei 24 Pulsen je Umdrehung. In Fig. 7 ist ein entsprechendes, sich auf die Phasen PH₁ und PH₃ beschränkendes Ablaufschema dargestellt, wobei unter δ die Rotorwinkel abgetragen sind. S₁ zeigt die Sensorsignale einer ersten Sensorschranke beim Durchlauf der Geberausformungen 5 und S₂ die Signale der zweiten Sensorschranke, jeweils in Abhängigkeit zum Rotorwinkel. Es ist zu erkennen, dass ein Detektierungsschema erreicht ist, welches vier unterschiedliche Ergebnisse E hervorbringt. Der Ergebniswert ist digital, so dass Ergebniswerte zwischen 0 und 3 erreicht werden können.

Entspricht das Ergebnis dem Wert 1, 2 oder 3 ist bei dieser beispielhaften Ausgestaltung der Geberscheibe 4 die Rotorlage eindeutig erkannt. Wird hingegen ein Wert E von 0 ermittelt, so entscheidet sich die momentane Rotorlage nach Erfassen des nächsten, zu ermittelnden Wertes.

Die digitalen Ergebniswerte werden genutzt zur Ansteuerung der Phasen PH₁ bis PH₃.

Anhand der Fig. 2 bis 5, bezogen auf ein Rotorsegment 2, wird nachstehend die Ermittlung der Rotorlage sowie die Ansteuerung der Spulen 3 bzw. der Phasen PH₃ und PH₁ erläutert.

In Fig. 2 schließt das Rotorsegment 2 zu der nächsten Spule 3 bzw. nächsten Phase PH₃ einen Winkel δ von -37,5° ein. In dieser Stellung durchläuft eine Geberausformung 5 den Bereich der mit S₂ bezeichneten Sensorschranke 7. Die andere mit S₁ bezeichnete Sensorschranke 7 hingegen sendet in dieser Stellung kein Signal. Wie aus dem Ablaufschema in Fig. 7 zu erkennen, resultiert hieraus ein Ergebniswert E=2. Dieser Ergebniswert bewirkt die Bestromung der Phase PH₃, d. h. der Spule 3, auf die sich das Rotorsegment 2 hinzu bewegt.

Das Stromdiagramm I bezieht sich auf die Gesamtstromaufnahme des Motors M, wobei jedoch jede Spule einzeln bestromt wird. Die bei der Winkelstellung -37,5° dargestellte Gesamtstromerhöhung resultiert aus der Ansteuerung der in Drehrichtung des Rotors 1 vor der Phase PH₃ liegenden und angesteuerten Phase PH₂.

In einer nächsten Rotorstellung gemäß Fig. 3, in welcher ein Winkel δ von -22,5° eingeschlossen wird, werden weder von der Sensorschranke S₂ noch von der Sensorschranke S₁ Signale ausgesandt, was einen Ergebniswert E=0 zur Folge hat. In Abhängigkeit zu dem zuvor ermittelten Ergebniswert E=2 wird bei diesem Ergebniswert E=0 eine Stromerhöhung der zuvor geschalteten Phase PH₃ bewirkt. Bevorzugt erfolgt hierbei eine Verdoppelung der Stromstärke (vergl. Diagramm in Fig. 7).

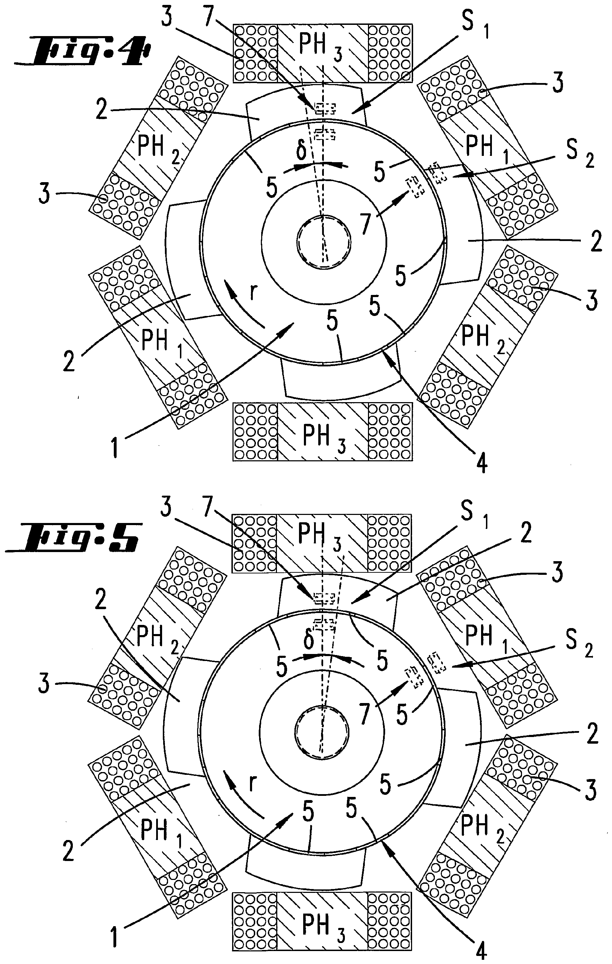

Im Zuge der weiteren Rotordrehung in Richtung des Pfeiles r erreicht der Rotor 1 eine Position, in welcher sowohl die erste Sensorschranke S₁ als auch die zweite Sensorschranke S₂ durch Durchlaufen von Geberausformungen 5 Signale senden. Dies erfolgt in einem Rotationswinkelbereich, in welchem das Rotorsegment 2 zu der Spule 3 beidseitig einer Totpunktstellung einen Winkel δ von 7,5° einschließt. Mit Beginn dieses Bereiches bei δ=-7,5° gemäß Fig. 4 erfolgt bei Erfassung des Ergebniswertes E=3 eine Zuschaltung der in Drehrichtung r des Rotors 1 der bereits geschalteten Phase PH₃ nachgeordnete Phase PH₁, wodurch eine Phasenüberlappung erreicht ist. Hierdurch wird eine kritische Momentenabnahme im Deckungsbereich von Rotorsegment 2 und zugeordneter Spule 3 der Phase PH₃ überbrückt, was einen gleichmäßigen, auch bei niedrigen Drehzahlen ruckfreien Lauf des Rotors 1 gewährleistet.

Wie aus dem Stromdiagramm in Fig. 7 zu erkennen, ist in diesem Rotationsbereich die Gesamtstromaufnahme verdreifacht.

Die erreichte Phasenüberlappung ist zeitlich begrenzt derart, dass noch vor Erreichen der 0°-Stellung die Phase PH₃ ausgeschaltet und somit die Gesamtstromaufnahme auf den einfachen Wert wieder zurückgesetzt wird, da die Bestromung der Phase PH₃ ausgeschaltet wird und hiernach nur noch die einfache Bestromung der Phase PH₁ vorliegt. Die Zeitsteuerung wird bevorzugt durch einen Mikrocontroller überwacht. Es wirkt zunächst nur die in Rotationsrichtung r nächste Spule bzw. Phase (hier Phase PH₁).

Nach Überschreiten der 0°-Stellung zwischen Rotorsegment 2 und zugeordneter Statorspule 3 verlassen bei einem Winkel δ von 7,5° die Geberausformungen 5 die Sensorschranken S₂ und S₁. In Abhängigkeit zu dem zuvor ermittelten Ergebniswert E=3 wird bei Erfassung des nunmehr vorliegenden Ergebniswertes E=0 eine erste Stromerhöhung der Phase PH₁ veranlasst. Anschließend erfolgt dasselbe Ablaufschema wie beschrieben, jedoch nunmehr bezogen auf die Phase PH₁ und die hierzu nachgeordnete Phase PH₂.

Das Diagramm in Fig. 6 zeigt die Momentenkurven in Abhängigkeit vom Rotationswinkel δ bei Erregen einer ersten Phase PH₃ und nachfolgender, zusätzlicher Erregung der Phase PH₁. Es ist zu erkennen, dass die Momentenkurven zunächst steil ansteigen und nach Überschreiten eines Maximums flach abfallen, wobei das Moment durch Phasenüberlappung in keinem Winkelbereich einen kritischen Wert nahe 0 erreicht, sondern vielmehr durch Momentenaddition eine annähernde Vergleichmäßigung des Moments erzielt wird.

Zufolge des zuvor beschriebenen erfindungsgemäßen Verfahrens ist der Gefahr eines ungleichmäßigen Laufens des Rotors 1 und darüber hinaus sogar eines Stehenbleibens desselben begegnet. Des Weiteren ist durch die Phasenüberlappung und die rotorlagenabhängige Stromregelung einer Drehzahlüberhöhung des Rotors 1 entgegengewirkt.

## Patentansprüche

1. Verfahren zur Steuerung eines Reluktanzmotors mit einem Rotor (1) und einem Stator, wobei der Rotor (1) eine Mehrzahl von Rotorsegmenten (2) aufweist und der Stator eine davon abhängige Anzahl von Spulen (3), so nämlich bei vier Rotorsegementen (2) sechs Spulen (3), und mit einer Ansteuervorrichtung, welche eine Spannung auf eine Spule (3) einer jeweiligen Phase (PH₁ bis PH₃) des Stators anlegt, **dadurch gekennzeichnet, dass** zu einem Zeitpunkt, in dem eine erste Spule (3) bereits erregt ist, nämlich bei Bewegung eines Rotorsegmentes (2) zu der Spule (3), die zweite, in Drehrichtung (r) des Rotors (1) folgende Spule (3) bereits zusätzlich erregt wird.

2. Verfahren nach Anspruch 1 **gekennzeichnet durch** eine Stromerhöhung bei zusätzlich zur ersten Spule (3) erregter zweiter Spule (3).

3. Verfahren nach Anspruch 2, **dadurch gekennzeichnet, dass** der Strom für eine vorgegebene Zeitspanne erhöht wird.

4. Verfahren nach einem der Ansprüche 1 bis 3, **dadurch gekennzeichnet, dass** ein beim Einschalten des Reluktanzmotors (M) auftretender Einschaltstrom hinsichtlich seiner Höhe begrenzt wird.

5. Verfahren nach Anspruch 4, **dadurch gekennzeichnet, dass** die Begrenzung mittels vorgeschalteter Widerstände (11) erfolgt.

6. Verfahren nach Anspruch 5, **dadurch gekennzeichnet, dass** ein Kondensator über die vorgeschalteten Widerstände (11) geladen wird und die Widerstände (11) nach Anfahren des Reluktanzmotors (M) überbrückt werden.

7. Verfahren nach Anspruch 6, **dadurch gekennzeichnet, dass** der Kondensator ein Elektrolytkondensator (10) ist.

8. Verfahren nach einem der Ansprüche 6 oder 7, dadurch gekenntzeichnet, dass die Überbrückung mittels eines Schalters (13) durchgeführt wird.

9. Verfahren nach Anspruch 8, **dadurch gekennzeichnet, dass** der Schalter (13) ein Halbleiter oder ein Relais (14) ist.

10. Verfahren nach einem der Ansprüche 6 bis 9, **dadurch gekennzeichnet, dass** die Überbrückung erst dann durchgeführt wird, wenn der Kondensator geladen ist.

## Claims

1. Method for controlling a reluctance motor comprising a rotor (1) and a stator, the rotor (1) having a plurality of rotor segments (2) and the stator having a number of coils (3) that is dependent thereon, that is to say six coils (3) when there are four rotor segments (2), and comprising an activation device which applies a voltage to a coil (3) of a particular phase (PH₁ to PH₃) of the stator, **characterised in that**, at a point in time when a first coil (3) is already excited, specifically when a rotor segment (2) moves relative to the coil (3), the second coil (3) following in the rotational direction (r) of the rotor (1) is already additionally excited.

2. Method according to claim 1, **characterised by** an increase in current in the second coil (3) that is excited in addition to the first coil (3).

3. Method according to claim 2, **characterised in that** the current is increased for a predefined duration.

4. Method according to any of claims 1 to 3, **characterised in that** the amount of starting current occurring when the reluctance motor (M) is switched on is limited.

5. Method according to claim 4, **characterised in that** the limiting is carried out by series-connected resistors (11).

6. Method according to claim 5, **characterised in that** a capacitor is charged by means of the series-connected resistors (11) and the resistors (11) are bypassed after the reluctance motor (M) has started up.

7. Method according to claim 6, **characterised in that** the capacitor is an electrolytic capacitor (10).

8. Method according to either claim 6 or claim 7, **characterised in that** the bypassing is carried out by means of a switch (13).

9. Method according to claim 8, **characterised in that** the switch (13) is a semiconductor or a relay (14).

10. Method according to any of claims 6 to 9, **characterised in that** the bypassing is only carried out if the capacitor is charged.

## Revendications

1. Procédé de commande d'un moteur à réluctance comprenant un rotor (1) et un stator, dans lequel le rotor (1) présente une pluralité de segments de rotor (2) et le stator un nombre de bobines (3) qui en dépend, à savoir six bobines (3) pour quatre segments de rotor (2), et comprenant un dispositif de commande qui applique à une bobine (3) une tension d'une phase respective (PH₁ à PH₃) du stator, **caractérisé en ce qu'**à un moment où une première bobine (3) est déjà excitée, à savoir lors du déplacement d'un segment de rotor (2) par rapport à la bobine (3), la deuxième bobine (3) qui suit dans la direction de rotation (r) du rotor (1) est aussi déjà excitée.

2. Procédé selon la revendication 1, **caractérisé par** une augmentation de courant lors de l'excitation de la deuxième bobine (3) en plus de la première bobine (3).

3. Procédé selon la revendication 2, **caractérisé en ce que** le courant est augmenté pendant une durée prédéterminée.

4. Procédé selon l'une des revendications 1 à 3, **caractérisé en ce que** le courant de démarrage qui apparait lors de l'allumage du moteur à réluctance (M) fait l'objet d'une limitation en ce qui concerne son intensité.

5. Procédé selon la revendication 4, **caractérisé en ce que** la limitation est obtenue au moyen de résistances montées en amont (11).

6. Procédé selon la revendication 5, **caractérisé en ce qu'**un condensateur est chargé par le biais des résistances montées en amont (11) et que les résistances (11) sont pontées après le démarrage du moteur à réluctance.

7. Procédé selon la revendication 6, **caractérisé en ce que** le condensateur est un condensateur électrolytique (10).

8. Procédé selon l'une des revendications 6 ou 7, **caractérisé en ce que** le pontage est réalisé au moyen d'un interrupteur (13).

9. Procédé selon la revendication 8, **caractérisé en ce que** l'interrupteur (13) est un semi-conducteur ou un relais (14).

10. Procédé selon l'une des revendications 6 à 9, **caractérisé en ce que** le pontage est réalisé seulement lorsque le condensateur est chargé.
